# EUROPÄISCHE PATENTSCHRIFT

(11) **EP 3 634 713 B1**
(45) Veröffentlichungstag und Bekanntmachung des Hinweises auf die Patenterteilung: **21.07.2021**
(21) Anmeldenummer: 18725194.7
(22) Anmeldetag: 16.05.2018
(51) Int. Cl.: B29C 45/66

(54) **SPRITZGIESSMASCHINEN-SCHLIESSEINHEITEN-SYSTEM**
SYSTEM OF INJECTION-MOULDING MACHINE CLOSING UNITS
SYSTÈME D'UNITÉS DE FERMETURE DE MACHINES DE MOULAGE PAR INJECTION

(30) Priorität: 07.06.2017 DE 102017112477
(43) Veröffentlichungstag der Anmeldung: 15.04.2020
(73) Patentinhaber: KraussMaffei Technologies GmbH, 80997 München (DE)
(72) Erfinder: SCHWEISSTHAL, Patrick, 80995 München (DE)
(74) Vertreter: Wilhelm, Ludwig
(86) Internationale Anmeldenummer: PCT/EP2018/062653
(87) Internationale Veröffentlichungsnummer: WO 2018/224256

(56) Entgegenhaltungen:
- DE-A1-102009 052 051
- Press Release: "World premiere: The new PX from KraussMaffei - the all-electric made-to-measure machine", , 19. Oktober 2016 (2016-10-19), Seiten 1-5, XP055493940, München, Germany Gefunden im Internet: URL:https://www.kraussmaffeigroup.com/medi a/files/kmnews/en/PM_IMM_2016_10_PX_en.pdf [gefunden am 2018-07-19]
- KraussMaffei: "Die neue PX: Power trifft Flexibilität", , 2016, Seiten 1-3, XP002783256, K 2016, Halle 15, Stand B27/C24/C27/D24 Gefunden im Internet: URL:https://plasticker.de/news/advertorial /km_k2016_02_de_x4d5s6g.php [gefunden am 2018-07-23]

## Beschreibung

Die Erfindung betrifft ein Spritzgießmaschinen-Schließeinheiten-System umfassend zwei Schließeinheiten, wobei jede der beiden Schließeinheiten als Kniehebel-Schließeinheit ausgebildet ist und wobei eine modulare Bauweise vorgesehen ist, um eine größere Freiheit beim Werkzeugeinsatz zu ermöglichen.

Aus der DE202007012787U1 ist eine Spritzgießmaschine mit modularem Aufbau bekannt, wobei das Maschinenbett zweiteilig ausgebildet ist und genormte Montage- und Kopplungsschnittstellen aufweist, welche die Formschlussseite und die Spritzaggregatseite zu einer einteiligen Spritzgießmaschine verbinden. Damit soll die Herstellung wie auch die Logistik, vor allem in dem Bereich des Maschinenherstellers, auf eine höhere Wirtschaftlichkeitsstufe gebracht werden, ohne dass daraus Nachteile für den Kunden entstehen.

In der PX-Baureihe der Anmelderin sind standardmäßig Schließeinheiten mit folgenden Schließkraftgrößen im Angebot:
PX50 mit 500 kN (etwa 50 Tonnen) Schließkraft
PX80 mit 800 kN (etwa 80 Tonnen) Schließkraft
PX120 mit 1200 kN (etwa 120 Tonnen) Schließkraft
PX160 mit 1600 kN (etwa 160 Tonnen) Schließkraft
PX200 mit 2000 kN (etwa 200 Tonnen) Schließkraft
Spritzgießmaschinen mit solchen Schließeinheiten sind auf der Messe K'2016 zur Schau gestellt worden (siehe auch Pressemitteilung vom 19.10.2016).

Der Erfindung liegt die Aufgabe zugrunde, ein Spritzgießmaschinen-Schließeinheiten-System anzugeben, mit dem es möglich ist, einem Kunden für einen bestimmten Anwendungsfall entsprechend einem bestimmten Werkzeuggewicht und einer bestimmten Werkzeuggröße nicht ausschließlich die dafür eigentlich vorgesehene Schließeinheit anbieten zu können, sondern auch eine kleinere und damit kostengünstigere Schließeinheit.

Die Lösung dieser Aufgabe erfolgt durch ein Spritzgießmaschinen-Schließeinheiten-System mit den Merkmalen von Anspruch 1. Vorteilhafte Ausgestaltungen und Weiterentwicklungen finden sich in den abhängigen Ansprüchen.

Ein Kerngedanke der vorliegenden Erfindung geht davon aus, dass von einem Maschinenhersteller üblicherweise Spritzgießmaschinen mit unterschiedlich großen Schließkräften angeboten werden. Die Schließkraft ist hierbei ein Maß, welches vorgibt, wie hoch die maximale Zuhaltekraft der Schließeinheit ist. Je größer ein Spritzgießwerkzeug ist, umso größer müssen die Schließkraft der Schließeinheit sowie die Formaufspannplatten sein, insbesondere die bei den Formaufspannplatten zur Verfügung stehende Werkzeugaufspannfläche. Mit der Größe eines Spritzgießwerkzeugs korrelliert somit auch die Größe einer Schließeinheit, insbesondere in Bezug auf die Größe der Formaufspannplatten und auf die erzeugbare Schließkraft. Wenn ein Spritzgießwerkzeug hinsichtlich seiner Abmessungen und seines Gewichts für eine Schließeinheit mit Formaufspannplatten einer ersten Größe und mit einer ersten Schließkraft F1 nicht mehr geeignet ist, ist der Erwerb einer Schließeinheit mit der nächstgrößeren Schließkraft F2 aus der vom Maschinenhersteller angeboten Reihe an Schließeinheiten erforderlich. Damit gehen erhöhte Kosten einher, insbesondere durch die größeren Formaufspannplatten und die größeren Antriebe zum Verfahren der beweglichen Formaufspannplatte und zum Erzeugen der größeren Schließkraft F2. Es kann jedoch Anwendungsfälle geben, bei welchen ein Kunde ein großes Spritzgießwerkzeug verwenden möchte, allerdings nicht die hohen Schließkräfte F2 der hierfür eigentlich vorgesehenen Schließeinheit benötigt. Dem Kunden würde es genügen, wenn lediglich größere Formaufspannplatten zur Verfügung gestellt werden könnten, welche in der Schließeinheit mit der ersten Schließkraft F1 benutzt werden könnten.

In diesem Zusammenhang spielt auch die sogenannte lichte Holmweite eine Rolle; man spricht auch von der lichten Weite der Säulen. Diese lichte Weite bestimmt die Größe der Werkzeugaufspannfläche und stellt somit eine Obergrenze für die äußeren Abmessungen eines Werkzeugs dar. Es hat sich gezeigt, dass die Abmessungen (lichte Holmweite) der Formaufspannplatten von Kniehebel-Schließeinheiten, insbesondere von Schließeinheiten mit 5-Punkt-Kniehebel maßgeblich die Herstellkosten der Schließeinheit beeinflussen. Aus diesem Grund ist die realisierte lichte Holmweite einer Schließeinheit als ein Kompromiss aus Kosten und Anpassung auf marktübliche Werkzeugabmessungen anzusehen.

Bei hydraulischen Schließeinheiten werden im Standard oft kleine lichte Holmweiten angeboten, die optional durch den Einsatz vergrößerter Formaufspannplatten vergrößert werden können, ohne dass die Schließeinheit im Übrigen größer wird. Dem Kunden können somit größere Formaufspannplatten zur Verfügung gestellt werden, welche in einer Schließeinheit mit einer ersten Schließkraft F1 benutzt werden können und der Kunde braucht nicht eine größere Schließeinheit mit einer zweiten Schließkraft F2 größer als F1 zu erwerben. Anders ausgedrückt bedeutet dies folgendes: Die Standard-Ausführung einer Schließeinheit mit einer Schließkraft F1 kann auch für den Betrieb mit vergrößerten Formaufspannplatten werden, wobei lediglich größere Formaufspannplatten und damit einhergehend eine größere lichte Holmweite zum Einsatz kommen. Dabei können auch diejenigen Formaufspannplatten zum Einsatz kommen, die ohnehin im Programm des Maschinenherstellers vorhanden sind, nämlich diejenigen der nächstgrößeren Schließkraftgröße. Auf diese Weise ergibt sich eine modulare Bauweise der im Programm des Maschinenherstellers befindlichen Schließeinheiten, was dem Kunden eine größere Freiheit beim Werkzeugeinsatz ermöglicht.

Im Unterschied zu hydraulischen Schließeinheiten kann die lichte Holmweite bei Kniehebel-Schließeinheiten nicht ohne weiteres durch den Einsatz vergrößerter Formaufspannplatten vergrößert werden. Eine optionale Vergrößerung der lichten Holmweite bei Kniehebel-Schließeinheiten und damit einhergehend eine Anpassung der geometrischen Abmessungen des Kniehebels an die veränderten Größen der Formaufspannplatten ist problematisch, weil sich dadurch die Regelparameter zum Verfahren der beweglichen Formaufspannplatte verändern würden. Das Vorstehende gilt in besonderem Maße für 5-Punkt-Kniehebel-Schließeinheiten.

Demzufolge wird gemäß der vorliegenden Erfindung ein Spritzgießmaschinen-Schließeinheiten-System angegeben, umfassend zwei Schließeinheiten, wobei jede der beiden Schließeinheiten als Kniehebel-Schließeinheit ausgebildet ist, wobei jede der beiden Schließeinheiten eine feststehende Formaufspannplatte, eine bewegliche Formaufspannplatte, eine Abstützplatte, einen mittels eines Antriebs entlang der Symmetrieachse der Schließeinheit verfahrbaren Kreuzkopf, und mindestens einen mittels des Kreuzkopfes betätigbaren, zwischen Abstützplatte und beweglicher Formaufspannplatte angeordneten und mit diesen Platten gelenkig verbundenen Kniehebelmechanismus aufweist, wobei jede der beiden Schließeinheiten gemäß einer ersten Schließkraft F1 ausgebildet ist, wobei eine der beiden Schließeinheiten mit Formaufspannplatten einer ersten Größe ausgestattet ist und eine Schließeinheit erster Art darstellt, wobei die andere der beiden Schließeinheiten mit Formaufspannplatten einer zweiten Größe ausgestattet ist und eine Schließeinheit zweiter Art darstellt, wobei die Formaufspannplatten der Schließeinheit zweiter Art größer sind als die Formaufspannplatten der Schließeinheit erster Art, insbesondere in Bezug auf die Werkzeugaufspannfläche, wobei die Gelenkhebel des Kniehebelmechanismus der Schließeinheit erster Art und die Gelenkhebel des Kniehebelmechanismus der Schließeinheit zweiter Art zumindest in Bezug auf die Länge zwischen den jeweiligen Gelenkpunkten P1, P2, P3, P4, P5 bei bezüglich ihrer räumlichen Anordnung in der jeweiligen Schließeinheit einander entsprechenden Gelenkhebeln identisch ausgebildet sind, wobei die Gelenkhebel des Kniehebelmechanismus der Schließeinheit zweiter Art in einem größeren Abstand zur Symmetrieachse an Abstützplatte und beweglicher Formaufspannplatte angelenkt sind als die Gelenkhebel des Kniehebelmechanismus der Schließeinheit erster Art, und wobei der Kreuzkopf der Schließeinheit zweiter Art in Richtung der Gelenkhebel des Kniehebelmechanismus größer ausgebildet ist als der Kreuzkopf der Schließeinheit erster Art, derart, dass die Kniehebelmechanismen der beiden Schließeinheiten die gleiche Kinematik aufweisen.

Bei Verwendung der größeren Formaufspannplatten werden die Gelenkpunkte, an welchen die Gelenkhebel an der Stützplatte und an der beweglichen Formaufspannplatte angelenkt sind, in ihrer Lage zur Symmetrieachse der Schließeinheit vorzugsweise in gleichem Maße nach außen von der Symmetrieachse weg verschoben. Infolgedessen wird der Kreuzkopf in einem Maße vergrößert, derart dass die Kinematik des Kniehebelmechanismus beibehalten wird. Die Größe des Kreuzkopfs wird somit an die veränderte Lage der Gelenkhebel angepasst. Dabei geht es in erster Linie um die Lage der Gelenkpunkte an dem Kreuzkopf, an welchen der Kniehebelmechanismus gelenkig mit dem Kreuzkopf verbunden wird. Die geometrischen Abmessungen des Kniehebels bleiben erhalten, trotz der vergrößerten Formaufspannplatten. Es werden also bei der Schließeinheit erster Art und bei der Schließeinheit zweiter Art die gleichen Gelenkhebel verwendet. Die Gelenkhebel sollten zumindest in Bezug auf die Länge zwischen den jeweiligen Gelenkpunkten P1, P2, P3, P4, P5 bei bezüglich ihrer räumlichen Anordnung in der jeweiligen Schließeinheit einander entsprechenden Gelenkhebeln identisch ausgebildet sein. Die übrigen Maße sind von eher untergeordneter Bedeutung, also z.B. die Dicke der Gelenkhebel. Im Sinne einer Modulbauweise ist es jedoch vorteilhaft, wenn die Gelenkhebel der Schließeinheit zweiter Art insgesamt identisch sind zu den Gelenkhebeln der Schließeinheit erster Art. Ein- und dieselben Gelenkhebel können somit sowohl in der Schließeinheit erster Art als auch in der Schließeinheit zweiter Art eingebaut werden.

Der Kunde benötigt somit nicht eine Schließeinheit der nächstgrößeren Schließkraft aus dem Programm des Maschinenherstellers, sondern lediglich vergrößerte Formaufspannplatten und einen angepassten Kreuzkopf. Bei der Anpassung des Kreuzkopfes kommt es lediglich darauf an, dass die Kinematik des Kniehebelmechanismus die gleiche bleibt. Die Anpassung liegt also darin, dass die Lage der Gelenkpunkte an dem Kreuzkopf in einem Maße von der Symmetrieachse weg verschoben werden, dass die Kinematik des Kniehebelmechanismus gleich bleibt. Es können diejenigen Formaufspannplatten zum Einsatz kommen, die ohnehin im Programm des Maschinenherstellers vorhanden sind, nämlich diejenigen der nächstgrößeren Schließkraftgröße. Auf diese Weise ergibt sich eine modulare Bauweise der im Programm des Maschinenherstellers befindlichen Schließeinheiten, was dem Kunden eine größere Freiheit beim Werkzeugeinsatz ermöglicht.

Demzufolge können gemäß einem weiteren Gedanken der vorliegenden Erfindung auch ein Spritzgießmaschinen-Schließeinheiten-System vorgesehen werden, das drei Schließeinheiten umfasst, wobei - kurz gesagt - zusätzlich zu zwei ohnehin im Programm befindlichen Schließeinheiten mit voneinander in üblicher Weise beabstandeten Schließkraftgrößen F1 und F2 eine weitere Schließeinheit vorgesehen ist, welche für Spritzgießwerkzeuge geeignet ist, für die normalerweise eine Schließeinheit der Schließkraftgröße F2 vorgesehen wäre, welcher aber mit Komponenten einer Schließeinheit der kleineren Schließkraftgröße F1 ausgestattet ist. Die weitere Schließeinheit bzw. diese "Zwischengröße" an Schließeinheit wird somit aus Komponenten gebildet, welche für zwei ohnehin im Programm befindliche Schließeinheiten mit voneinander in üblicher Weise beabstandeten Schließkraftgrößen F1 und F2 vorhanden oder vorgesehen sind. Insbesondere können die Formaufspannplatten und die Abstützplatte mit den Maßen der größeren Schließkraftgröße F2 und der Kniehebelmechanismus der kleineren Schließkraftgröße F1 miteinander kombiniert werden. Es wird sozusagen eine modulare Bauweise bereitgestellt, um eine größere Freiheit beim Werkzeugeinsatz zu ermöglichen Im Ergebnis kann dem Kunden somit eine kostengünstigere Schließeinheit angeboten werden als wenn es diese "Zwischengröße" an Schließeinheit nicht gäbe.

Gemäß einer ersten Ausgestaltung der Erfindung kann vorgesehen werden, dass die Gelenkhebel des Kniehebelmechanismus der Schließeinheit erster Art in einem ersten Abstand zur Symmetrieachse an Abstützplatte und beweglicher Formaufspannplatte angelenkt sind und dass die Gelenkhebel des Kniehebelmechanismus der Schließeinheit zweiter Art in einem zweiten Abstand zur Symmetrieachse an Abstützplatte und beweglicher Formaufspannplatte angelenkt sind, wobei sich eine Abstandsdifferenz A zwischen dem zweiten und dem ersten Abstand ergibt. Der Kreuzkopf der Schließeinheit zweiter Art kann in Richtung der Gelenkhebel des Kniehebelmechanismus in Abhängigkeit von der Abstandsdifferenz A entsprechend größer ausgebildet sein als der Kreuzkopf der Schließeinheit erster Art, vorzugsweise genau um den Betrag der Abstandsdifferenz A. Vorliegend kommt es bei den hier in Rede stehenden Abständen auf die Lage der Gelenkpunkte an, d.h. die Abstandsdifferenz A ergibt sich aus der Lage der Gelenkpunkte bzw. aus der Veränderung der Lage der Gelenkpunkte bei der Schließeinheit zweiter Art im Vergleich zur Lage der Gelenkpunkte bei der Schließeinheit erster Art.

Ferner kann vorgesehen sein, dass der Kreuzkopf der ersten Schließeinheit und der Kreuzkopf der zweiten Schließeinheit jeweils zwei Befestigungseinrichtungen, insbesondere Gelenkbolzen und/oder Gelenklaschen, aufweisen, welche zur gelenkigen Befestigung eines Gelenkhebels des Kniehebelmechanismus ausgebildet sind, wobei die Befestigungseinrichtungen symmetrisch zur Symmetrieachse liegen. Vorzugsweise können jeweils eine obere und eine untere Befestigungseinrichtung vorgesehen sein, d.h. eine oberhalb der Symmetrieachse liegende Befestigungseinrichtung und eine unterhalb der Symmetrieachse liegende Befestigungseinrichtung, welche in einer vertikalen Ebene liegen. Der Abstand zwischen den Gelenkpunkten der Befestigungseinrichtungen an dem Kreuzkopf der zweiten Schließeinheit sollte um eine bestimmte Länge L größer sein als der Abstand zwischen den Gelenkpunkten der Befestigungseinrichtungen an dem Kreuzkopf der ersten Schließeinheit.

Wenn die oben genannte Abstandsdifferenz A einmal oberhalb und einmal unterhalb der Symmetrieachse vorliegt, wird die Länge L in Abhängigkeit der Summe der beiden Abstandsdifferenzen vorgegeben sein, damit die Kniehebelmechanismen der beiden Schließeinheiten die gleiche Kinematik aufweisen. Vorzugsweise sollte die Länge L dem Zweifachen der Abstandsdifferenz entsprechen. Wenn also wenigstens ein oberer und wenigstens ein unterer Kniehebelmechanismus vorgesehen sind und die Abstandsdifferenz A vorliegt, dann sollte der Abstand H2 zwischen den Gelenkpunkten an dem Kreuzkopf der Schließeinheit zweiter Art um das Zweifache der Abstandsdifferenz A größer sein als der Abstand H1 zwischen den Gelenkpunkten an dem Kreuzkopf der Schließeinheit erster Art, d.h. H2 = H1 + 2A.

Bevorzugt können die Säuen der Schließeinheit erster Art und die Säulen der Schließeinheit zweiter Art den gleichen Durchmesser aufweisen. Damit kann bei der Schließeinheit zweiter Art eine Werkzeugaufspannfläche zur Verfügung gestellt werden, die sogar geringfügig größer ist als die Werkzeugaufspannfläche bei der nächstgrößeren Schließeinheit, bei welcher der Durchmesser der Säulen größer ist als der Durchmesser der Säulen der Schließeinheit erster Art.

Gemäß einem weiteren Gedanken der vorliegenden Erfindung kann der Antrieb zum Verfahren des Kreuzkopfs der Schließeinheit erster Art hinsichtlich seiner Konstruktion und seiner Antriebsleistung identisch sein wie der Antrieb zum Verfahren des Kreuzkopfs der Schließeinheit zweiter Art. Insbesondere können identische Motoren vorgesehen sein. Die Verwendung der Antriebe der kleineren Schließeinheit erster Art anstelle der Antriebe der nächstgrößeren Schließeinheit wirkt sich positiv auf die Kostenseite aus. Anstelle von Motoren können aber auch hydraulische Antriebe verwendet werden.

Gemäß einer bevorzugten Weiterbildung des erfindungsgemäßen Spritzgießmaschinen-Schließeinheiten-Systems kann eine weitere Schließeinheit vorgesehen sein, die gemäß einer zweiten Schließkraft F2 ausgebildet ist und eine Schließeinheit dritter Art darstellt, wobei die zweite Schließkraft F2 größer ist als die erste Schließkraft F1 der Schließeinheiten erster und zweiter Art. Insbesondere kann es sich dabei um die im Programm des Maschinenherstellers vorgesehene Schließeinheit mit der nächstgrößeren Schließkraft handeln. Das Programm des Maschinenherstellers würde somit standardmäßig eine Schließeinheit erster Art mit einer ersten Schließkraft F1 und als nächstgrößere Schließeinheit eine Schließeinheit dritter Art mit einer zweiten Schließkraft F2 umfassen. Erfindungsgemäß würde nun eine Schließeinheit zweiter Art mit der ersten Schließkraft F1 im Programm des Maschinenherstellers angeboten werden können. Diese weitere Schließeinheit zweiter Art bildet somit die oben genannte "Zwischengröße" an Schließeinheit.

Je nachdem wie stark der Gedanke der Modulbauweise ausgeprägt sein soll, können die Formaufspannplatten der Schließeinheit zweiter Art und die Formaufspannplatten der Schließeinheit dritter Art die gleiche Höhe und/oder die gleiche Breite und/oder die gleiche Dicke aufweisen. Ferner können die Abstützplatte der Schließeinheit zweiter Art und die Abstützplatte der Schließeinheit dritter Art die gleiche Höhe und/oder die gleiche Breite und/oder die gleiche Dicke aufweisen. Je mehr identische Bauteile von der Schließeinheit dritter Art für die Schließeinheit zweiter Art verwendet werden können, umso günstiger wirkt sich dies auf die Herstellungskosten und somit die vom Kunden zu erbringenden Investitionskosten aus. Im günstigsten Falle werden für die Schließeinheit zweiter Art und die Schließeinheit dritter Art Formaufspannplatten und Abstützplatten mit identischen Abmessungen verwendet. Für die Schließeinheit zweiter Art können somit die ohnehin im Programm des Maschinenherstellers vorgesehenen Platten (Formaufspannplatten, Abstützplatten) der Schließeinheit dritter Art verwendet werden.

Gemäß einer Ausbildung der Erfindung können die Formaufspannplatten der Schließeinheit zweiter Art eine Werkzeugaufspannfläche aufweisen, die der Werkzeugaufspannfläche der Formaufspannplatten der Schließeinheit dritter Art entsprechen zuzüglich eines Flächenanteils an Werkzeugaufspannfläche, die sich aus der Differenz zwischen dem Durchmesser der Säulen der Schließeinheit dritter Art und dem Durchmesser der Säulen der Schließeinheit zweiter Art errechnet. Im Ergebnis kann somit bei der Schließeinheit zweiter Art eine Werkzeugaufspannfläche zur Verfügung gestellt werden, die größer ist als die Werkzeugaufspannfläche bei der Schließeinheit dritter Art, je nachdem wie groß der Unterschied ist zwischen dem Durchmesser der Säulen der Schließeinheit dritter Art und dem Durchmesser der Säulen der Schließeinheit zweiter Art. Dabei kann der Achsabstand der Säulen bei der zweiten Schließeinheit gleich groß sein wie der Achsabstand der Säulen bei der dritten Schließeinheit.

Vorteilhafterweise sind die Formaufspannplatten der Schließeinheit zweiter Art für das gleiche maximale Werkzeuggewicht ausgelegt wie die Formaufspannplatten der Schließeinheit dritter Art.

Weiterhin kann vorgesehen sein, dass an jeder Schließeinheit zwei Paare an Gelenkhebeln vorgesehen sind, wobei die beiden Paare symmetrisch zur Symmetrieachse angeordnet sind, und wobei das eine Paar oberhalb der Symmetrieachse und das andere Paar unterhalb der Symmetrieachse angeordnet ist.

Ferner können auf dem Maschinenbett der jeweiligen Schließeinheit Führungsschienen für die bewegliche Formaufspannplatte vorgesehen sein, wobei der Achsabstand der Führungsschienen bei der Schließeinheit erster Art geringer ist als der Achsabstand bei der Schließeinheit zweiter Art.

Wenn darüber hinaus auch eine Schließeinheit dritter Art vorgesehen ist, kann vorzugsweise der Achsabstand der Führungsschienen bei der Schließeinheit zweiter Art genau so groß sein wie der Achsabstand der Führungsschienen bei einer Schließeinheit dritter Art. Besonders bevorzugt kann zudem die Grundfläche des Maschinenbetts bei der Schließeinheit zweiter Art genau so groß sein wie die Grundfläche des Maschinenbetts bei der Schließeinheit dritter Art. Für die Schließeinheit zweiter Art und die Schließeinheit dritter Art kann somit das gleiche Maschinenbett verwendet werden.

Unter Maschinenbett ist vorliegend ein Maschinenbett zu verstehen, das lediglich für den Aufbau der Schließeinheit vorgesehen ist. Für die Spritzeinheit der Spritzgießmaschine ist ein eigenes Maschinenbett vorgesehen. Soweit bei der Beschreibung der vorliegenden Erfindung von einem Maschinenbett die Rede ist, ist damit das für den Aufbau der Schließeinheit vorgesehene Maschinenbett gemeint. Insofern kann der Begriff "Maschinenbett" vorliegend auch als "Schließeinheit-Maschinenbett" verstanden werden.

Vorzugsweise kann Kniehebelmechanismus als 4-Punkt-Kniehebel oder als 5-Punkt-Kniehebel ausgebildet sein. Besonders bevorzugt ist die Ausführung als 5-Punkt-Kniehebel weil die erreichbare Gesamtübersetzung eine kostengünstige Dimensionierung der Antriebe ermöglicht.

Die Beschreibung der Erfindung soll anhand der PX-Baureihe der Anmelderin vorgenommen werden. In der PX-Baureihe der Anmelderin sind standardmäßig Schließeinheiten mit folgenden Schließkraftgrößen im Angebot:
PX50 mit 500 kN (etwa 50 Tonnen) Schließkraft
PX80 mit 800 kN (etwa 80 Tonnen) Schließkraft
PX120 mit 1200 kN (etwa 120 Tonnen) Schließkraft
PX160 mit 1600 kN (etwa 160 Tonnen) Schließkraft
PX200 mit 2000 kN (etwa 200 Tonnen) Schließkraft

Für die weitere Beschreibung sollen die Schließeinheiten vom Typ PX50 und PX80 verwendet werden. Erfindungsgemäß ist nun noch eine Schließeinheit vom Typ PX51 vorgesehen, die aus Komponenten der Schließeinheiten PX50 und PX80 zusammengesetzt ist. In der Tabelle 1 sind einige wesentlichen technischen Daten zu den jeweiligen Schließkrafttypen PX50, PX51 und PX80 angegeben. Daraus ist ersichtlich, dass die Formaufspannplatten und die Abstützplatte der PX51 die identischen Abmessungen aufweisen wie bei der PX80. Die Schließkraft der PX51 entspricht jedoch der Schließkraft der PX50. Die Gelenkhebel von PX50 und PX51 sind ebenso identisch wie die Motoren zum Verfahren des Kreuzkopfs. Lediglich der Kreuzkopf ist in seiner Größe an die vergrößerten Platten angepasst. Der Abstand zwischen oberem zu unterem Gelenkbolzen ist bei der PX51 größer als bei der PX50. Der genaue Unterschied dieses Abstands ergibt sich aus der Verschiebung der Gelenkpunkte an der Stützplatte und an der beweglichen Formaufspannplatte in ihrer Lage zur Maschinenlängsachse von der PX50 zur PX51.

Im Sinne der vorliegenden Beschreibung und auch der Ansprüche entspricht die Schließeinheit erster Art der PX50, die Schließeinheit zweiter Art der PX51 und die Schließeinheit dritter Art der PX80. Die Schließeinheit erster Art und die Schließeinheit dritter Art sind diejenigen Schließeinheiten, die vorliegend auch als ohnehin im Programm befindliche (Standard)-Schließeinheiten bezeichnet worden sind. Demgemäß können die PX50 und die PX80 vorliegend auch als zwei ohnehin im Programm befindliche (Standard)-Schließeinheiten mit voneinander in üblicher Weise beabstandeten Schließkraftgrößen F1 und F2 verstanden werden, wobei F1 gleich 500 kN ist und F2 gleich 800 kN ist. Die PX51 bildet somit die weitere Schließeinheit zweiter Art, welche vorliegend auch als "Zwischengröße" an Schließeinheit verstanden werden kann. Der Begriff der "Zwischengröße" ist bereits oben bei der Beschreibung der Erfindung eingeführt worden. Diese "Zwischengröße" wird somit aus Komponenten gebildet, welche für die zwei ohnehin im Programm befindlichen Schließeinheiten PX50 und PX80 mit voneinander in üblicher Weise beabstandeten Schließkraftgrößen F1 (500 kN) und F2 (800 kN) vorhanden oder vorgesehen sind. Mit diesem Konzept wird sozusagen eine modulare Bauweise bereitgestellt, um eine größere Freiheit beim Werkzeugeinsatz zu ermöglichen Im Ergebnis kann dem Kunden somit eine kostengünstigere Schließeinheit angeboten werden als wenn es diese "Zwischengröße" an Schließeinheit nicht gäbe.

Nachfolgend soll die Erfindung anhand eines Ausführungsbeispiels und unter Bezugnahme auf die Figuren 1a bis 2b näher beschrieben werden. Es zeigen:
- Fig.1a: Teil-Seitenansicht der Schließeinheit PX50
- Fig.1b: Teil-Seitenansicht der Schließeinheit PX51
- Fig.2a: Draufsicht bei der PX50 auf den Kreuzkopf aus Richtung der beweglichen Formaufspannplatte
- Fig.2b: Draufsicht bei der PX51 auf den Kreuzkopf aus Richtung der beweglichen Formaufspannplatte

In der Tabelle 1 sind ausgewählte technische Daten für die PX50 und die PX51 angegeben.

Nachfolgend werden für vergleichbare Bauteile Bezugszeichen mit der Erweiterung "a" für Bauteile der PX50 und Bezugszeichen mit der Erweiterung "b" für Bauteile der PX51 verwendet.

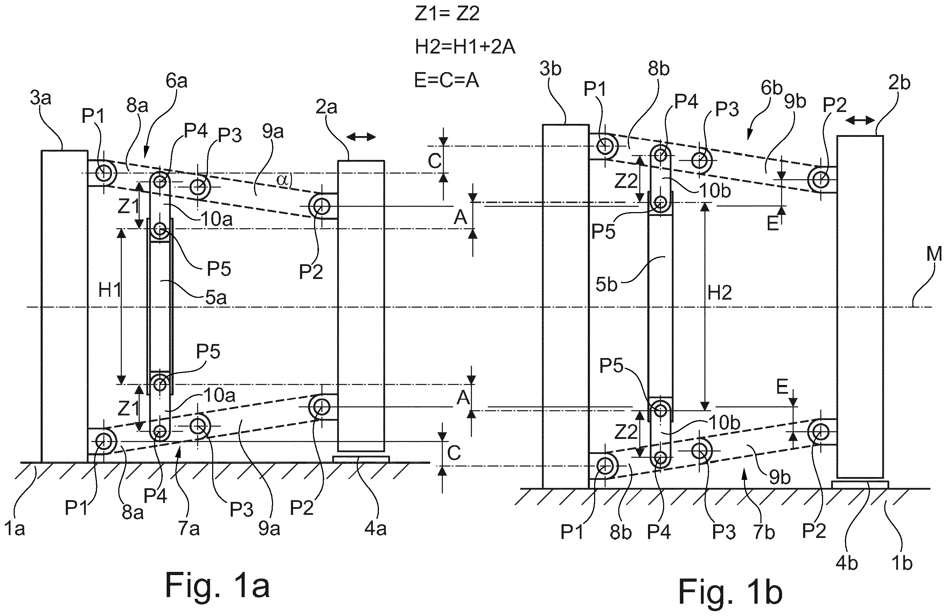

Die Figuren 1a und 1b zeigen jeweils ein Maschinenbett 1a, 1b, auf welchem die Bestandteile der Schließeinheit montiert sind. Neben einer nicht dargestellten feststehenden Formaufspannplatte ist sind jeweils eine bewegliche Formaufspannplatte 2a, 2b und eine Abstützplatte 3a, 3b vorgesehen. Der besseren Übersicht wegen sind die Säulen in den Figuren 1a und 1b nicht dargestellt. Die beweglichen Formaufspannplatten 2a und 2b sind mittels angedeuteter Gleitschuhe 4a, 4b oder dergleichen auf oder an Führungsschienen 12a, 12b verschiebbar auf dem jeweiligen Maschinenbett 1a, 1b abgestützt. Jede Schließeinheit umfasst einen Kreuzkopf 5a, 5b, die jeweils mittels eines nicht dargestellten, an sich bekannten Antriebs entlang der Maschinenlängsachse M verfahren werden können. Bei PX50 (Figur 1a) und bei PX51 (Figur 1b) sind jeweils ein Kniehebel-Mechanismus angeordnet, wobei ein oberer Kniehebel-Mechanismus 6a, 6b und ein unterer Kniehebel-Mechanismus 7a, 7b vorgesehen sind. Der obere Kniehebelmechanismus 6a der PX50 umfasst einen ersten, an der Abstützplatte angelenkten Gelenkhebel 8a und einen zweiten, an der beweglichen Formaufspannplatte 2a angelenkten Gelenkhebel 9a. An dem ersten Gelenkhebel 8a ist ein weiterer Gelenkhebel 10a angelenkt, welcher an seinem dem Gelenkhebel 8a abgewandten Ende gelenkig mit dem Kreuzkopf 5a verbunden ist. Der untere Kniehebelmechanismus 7a der PX50 ist in gleicher Weise aufgebaut und umfasst die gleichen Gelenkhebel 8a, 9a und 10a.

Die Kniehebel-Mechanismen 6b und 7b der PX51 verfügen in gleicher Weise über Gelenkhebel 8b, 9b und 10b. Die Gelenkhebel 8a, 9a und 10a der PX50 und die Gelenkhebel 8b, 9b und 10b der PX51 sind zumindest in Bezug auf ihre Länge zwischen den Gelenkpunkten identisch, d.h. gleich lang ausgebildet. In Bezug auf die am Kreuzkopf angelenkten Gelenkhebel 10a bzw. 10b bedeutet dies Z1 = Z2. Die übrigen Maße sind von eher untergeordneter Bedeutung, also z.B. die Dicke der Gelenkhebel. Im Sinne einer Modulbauweise ist es jedoch vorteilhaft, wenn die Gelenkhebel 8a, 9a und 10a der PX50 insgesamt identisch sind zu den Gelenkhebeln 8b, 9b und 10b der PX51. Ein- und dieselben Gelenkhebel können somit sowohl in der PX50 als auch in der PX51 eingebaut werden. Der Kreuzkopf 5b der PX51 (entsprechend der Schließeinheit zweiter Art) ist in Richtung der Gelenkhebel der Kniehebelmechanismen 6b und 7b größer ausgebildet als der Kreuzkopf 5a der PX50 (entsprechend der Schließeinheit erster Art). Die Vergrößerung bezieht sich hierbei auf den Abstand H zwischen oberem und unterem Gelenkpunkt. Wie aus den Figuren 1a und 1b ersichtlich ist, ist der Abstand H2 beim Kreuzkopf 5b größer als der Abstand H1 beim Kreuzkopf 5a. Die Differenz zwischen H2 und H1 ist durch die Verschiebung der Gelenkmechanismen vorgegeben. Im Vergleich zur Figur 1a sind in der Figur 1b die Anlenkpunkte der Gelenkhebel 8b um eine Länge C und die Anlenkpunkte der Gelenkhebel 9b um eine Länge E von der Maschinenlängsachse M weg verschoben worden. Infolgedessen haben sich auch die Anlenkpunkte für die Gelenkhebel 10b an dem Kreuzkopf um eine Länge A verschoben. Das Maß der Verschiebung ist identisch, d.h. E = C = A. Daraus ergibt sich auch die Differenz zwischen H2 und H1, nämlich in der Weise, dass H2 = H1 + 2A ist. Der Kreuzkopf 5b der PX51 ist in Richtung der Gelenkhebel der Kniehebelmechanismen 6b und 7b also um das doppelte Maß der Verschiebung der Gelenkmechanismen größer ausgebildet als der Kreuzkopf 5a der PX50. Dadurch, dass das Maß der Verschiebung an der Abstützplatte 3b und an der beweglichen Formaufspannplatte 2b gleich groß ist (C = E), bleibt auch der Winkel α unverändert, welcher die Verbindungslinie der beiden äußeren Gelenkpunkte P1 und P2 mit der Maschinenlängsachse M einschließt. Der Einfachheit halber ist der Winkel α in der Figur 1 in Bezug auf eine zur Maschinenlängsachse M liegende parallele Linie dargestellt. Insgesamt ergibt sich somit, dass die Kniehebelmechanismen der beiden Schließeinheiten die gleiche Kinematik aufweisen.

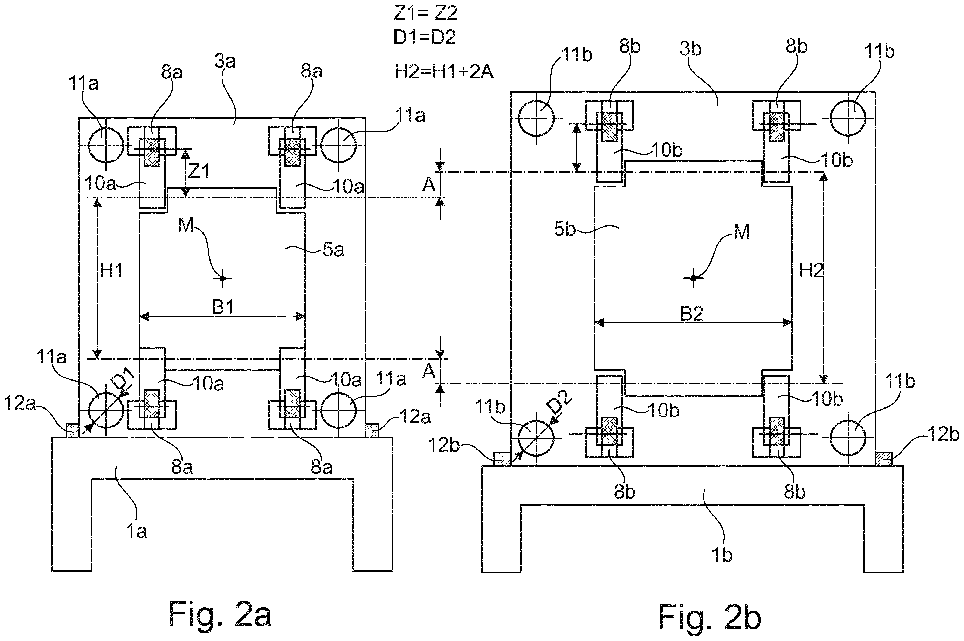

In den Figuren 2a und 2b sind die Säulen 11a, 11b eingezeichnet und deren Durchmesser mit D1 bei der PX50 und D2 bei der PX51 angegeben. Der Durchmesser der Säulen ist bei PX50 und PX51 identisch, d.h. D1 = D2. Auch aus der Darstellung in den Figuren 2a und 2b ist die Vergrößerung des Kreuzkopfs in Richtung der Gelenkhebel ersichtlich, d.h. H2 = H1 + 2A. Die Breite B1 bwz. B2 des jeweiligen Kreuzkopfes ist nicht relevant, d.h. B1 kann gleich groß sein wie B2 oder unterschiedlich so wie vorliegend dargestellt.

Der Vollständigkeit halber ist anzumerken, dass sämtliche Maße im Zusammenhang mit dem oder den Kniehebelmechanismen immer zur Drehachse an den jeweiligen Gelenkpunkten P1 bis P5 gehen. Die Bezugszeichen P1 bis P5 bezeichnen in den Figuren 1a und 1b somit die Lage der Drehachse in den jeweiligen Gelenken.

**Tabelle 1**

| Gemeinsamkeiten A = gemeinsam zwischen PX50 und PX51 | | | | |
|---|---|---|---|---|
| (Gemeinsamkeiten B) = gemeinsam zwischen PX51 und PX80 | | | | |
| | **PX50** | **PX51** | **PX80** | |
| | | | | Bemerkung |
| **Schließkraft** | 500 | 500 | 800 | [KN] |
| | | | | |
| **Werkzeuggewicht** | 450 | (750) | (750) | [Kg] |
| | | | | |
| **Achsabstand Säulen** | 425 x 375 | (490 x 440) | (490 x 440) | h x v [mm] |
| | | | | |
| **Lichte Weite Säulen** | 370 x 320 | 435 x 385 | 420x370 | h x v [mm] |
| | | | | |

| **Aufspannplatten** | | | | |
|---|---|---|---|---|
| FWAP | 620 x 560 | (700 x 645) | (700 x 645) | h x v [mm] |
| BWAP | 575 x 500 | (655 x 588) | (655 x 588) | h x v [mm] |
| Abstützplatte | 800 x 590 | (870 x 685) | (870 x 685) | h x v [mm] |
| Dicke FWAP, BWAP und Abstützplatte | 155 | (175) | (175) | [mm] |
| | | | | |

| **Kniehebelmechanismus** | | | | |
|---|---|---|---|---|
| Kreuzkopf | 251,2 | 321,2 | 288 | Abstand oberer zu unterem Gelenkbolzen am Kreuzkopf [mm] |
| Antrieb | Motor 1 | Motor 1 | Motor 2 | Antriebsmotor Kreuzkopf |
| Gelenk 1 | 295 | 295 | 340 | Abstand Gelenkaugen [mm] |
| Gelenk 2 | 197 | 197 | 227 | Abstand Gelenkaugen [mm] |
| Gelenk 3 | 118 | 118 | 136 | Abstand Gelenkaugen [mm] |
| | | | | |
| **Maschinenbett (Schließeinheit)** | 2000 x 650 | (2300 x 700) | (2300 x 700) | Grundfläche Maschinenbett [mm] |
| **Achsabstand Führungsschienen BWAP** | 474 | 554 | 554 | [mm] |
| **Säulen** | 55 | 55 | 70 | Säulendurchmesser [mm] |

### Bezugszeichenliste

- 1a, 1b: Maschinenbett
- 2a, 2b: Bewegliche Formaufspannplatte
- 3a, 3b: Abstützplatte
- 4a, 4b: Gleitschuhe
- 5a, 5b: Kreuzkopf
- 6a, 6b: Oberer Kniehebelmechanismus
- 7a, 7b: Unterer Kniehebelmechanismus
- 8a, 8b: Gelenkhebel zur Abstützplatte
- 9a, 9b: Gelenkhebel zur beweglichen Formaufspannplatte
- 10a, 10b: Gelenkhebel zum Kreuzkopf
- 11a, 11b: Säulen
- 12a, 12b: Führungsschienen

## Patentansprüche

1. Spritzgießmaschinen-Schließeinheiten-System umfassend zwei Schließeinheiten, wobei jede der beiden Schließeinheiten als Kniehebel-Schließeinheit ausgebildet ist, wobei jede der beiden Schließeinheiten eine feststehende Formaufspannplatte, eine bewegliche Formaufspannplatte (2a, 2b), eine Abstützplatte (3a, 3b), einen mittels eines Antriebs entlang der Symmetrieachse (M) der Schließeinheit verfahrbaren Kreuzkopf (5a, 5b), und mindestens einen mittels des Kreuzkopfes (5a, 5b) betätigbaren, zwischen Abstützplatte (3a, 3b) und beweglicher Formaufspannplatte (2a, 2b) angeordneten und mit diesen Platten gelenkig verbundenen Kniehebelmechanismus (6a, 6b, 7a, 7b) aufweist, wobei jede der beiden Schließeinheiten gemäß einer ersten Schließkraft F1 ausgebildet ist, wobei eine der beiden Schließeinheiten mit Formaufspannplatten (2a) einer ersten Größe ausgestattet ist und eine Schließeinheit erster Art darstellt, wobei die andere der beiden Schließeinheiten mit Formaufspannplatten (2b) einer zweiten Größe ausgestattet ist und eine Schließeinheit zweiter Art darstellt, wobei die Formaufspannplatten (2b) der Schließeinheit zweiter Art größer sind als die Formaufspannplatten (2a) der Schließeinheit erster Art, insbesondere in Bezug auf die Werkzeugaufspannfläche, wobei die Gelenkhebel (8a, 9a, 10a) des Kniehebelmechanismus (6a, 7a) der Schließeinheit erster Art und die Gelenkhebel (8b, 9b, 10b) des Kniehebelmechanismus (6b, 7b) der Schließeinheit zweiter Art zumindest in Bezug auf die Länge zwischen den jeweiligen Gelenkpunkten (P1, P2, P3, P4, P5) bei bezüglich ihrer räumlichen Anordnung in der jeweiligen Schließeinheit einander entsprechenden Gelenkhebeln identisch ausgebildet sind, wobei die Gelenkhebel (8b, 9b, 10b) des Kniehebelmechanismus (6b, 7b) der Schließeinheit zweiter Art in einem größeren Abstand zur Symmetrieachse (M) an Abstützplatte (3b) und beweglicher Formaufspannplatte (2b) angelenkt sind als die Gelenkhebel (8a, 9a, 10a) des Kniehebelmechanismus (6a, 7a) der Schließeinheit erster Art, und wobei der Kreuzkopf (5b) der Schließeinheit zweiter Art in Richtung der Gelenkhebel (8b, 9b, 10b) des Kniehebelmechanismus (6b, 7b) größer ausgebildet ist als der Kreuzkopf (5a) der Schließeinheit erster Art, derart, dass die Kniehebelmechanismen der beiden Schließeinheiten die gleiche Kinematik aufweisen.

2. System nach Anspruch 1,
**dadurch gekennzeichnet, dass**
die Gelenkhebel (8a, 9a, 10a) des Kniehebelmechanismus (6a, 7a) der Schließeinheit erster Art in einem ersten Abstand zur Symmetrieachse (M) an Abstützplatte (3a) und beweglicher Formaufspannplatte (2a) angelenkt sind, dass die Gelenkhebel (8b, 9b, 10b) des Kniehebelmechanismus (6b, 7b) der Schließeinheit zweiter Art in einem zweiten Abstand zur Symmetrieachse (M) an Abstützplatte (3b) und beweglicher Formaufspannplatte (2b) angelenkt sind, wobei sich eine Abstandsdifferenz (A, C, E) zwischen dem zweiten und dem ersten Abstand ergibt, und wobei der Kreuzkopf (5b) der Schließeinheit zweiter Art in Richtung der Gelenkhebel (8b, 9b, 10b) des Kniehebelmechanismus (6b, 7b) in Abhängigkeit von der Abstandsdifferenz (A, C, E) größer ausgebildet ist als der Kreuzkopf (5a) der Schließeinheit erster Art, vorzugsweise genau um den Betrag der Abstandsdifferenz (A, C, E).

3. System nach Anspruch 1 oder 2,
**dadurch gekennzeichnet, dass**
der Kreuzkopf (5a) der ersten Schließeinheit und der Kreuzkopf (b) der zweiten Schließeinheit jeweils zwei Befestigungseinrichtungen (Gelenkbolzen und/oder Gelenklaschen) aufweisen, welche zur gelenkigen Befestigung eines Gelenkhebels ausgebildet sind, wobei die Befestigungseinrichtungen symmetrisch zur Symmetrieachse (M) liegen, und wobei der Abstand zwischen den Gelenkpunkten der Befestigungseinrichtungen an dem Kreuzkopf der zweiten Schließeinheit um eine Länge L größer ist als der Abstand zwischen den Gelenkpunkten der Befestigungseinrichtungen an dem Kreuzkopf (5b) der ersten Schließeinheit.

4. System nach Anspruch 3,
**dadurch gekennzeichnet, dass**
an dem Kreuzkopf (5a) der Schließeinheit erster Art und an dem Kreuzkopf (5b) der Schließeinheit zweiter Art jeweils eine obere und eine untere Befestigungseinrichtung vorgesehen sind.

5. System nach einem der vorstehenden Ansprüche,
**dadurch gekennzeichnet, dass**
die Säulen (11a) der Schließeinheit erster Art und die Säulen (11b) der Schließeinheit zweiter Art den gleichen Durchmesser (D1 = D2) aufweisen.

6. System nach einem der vorstehenden Ansprüche,
**dadurch gekennzeichnet, dass**
der Antrieb zum Verfahren des Kreuzkopfs (5a) der ersten Schließeinheit hinsichtlich seiner Konstruktion und seiner Antriebsleistung identisch ist mit dem Antrieb zum Verfahren des Kreuzkopfs (5b) der zweiten Schließeinheit, wobei insbesondere identische Motoren vorgesehen sind, z.B. Elektro- oder Hydromotoren.

7. System nach einem der vorstehenden Ansprüche und mit einer weiteren Schließeinheit,
**dadurch gekennzeichnet, dass**
die weitere Schließeinheit gemäß einer zweiten Schließkraft F2 ausgebildet ist und eine Schließeinheit dritter Art darstellt, wobei die zweite Schließkraft F2 größer ist als die erste Schließkraft F1 der Schließeinheiten erster und zweiter Art.

8. System nach Anspruch 7,
**dadurch gekennzeichnet, dass**
die Formaufspannplatten der Schließeinheit zweiter Art und die Formaufspannplatten der Schließeinheit dritter Art die gleiche Höhe und/oder die gleiche Breite und/oder die gleiche Dicke aufweisen.

9. System nach Anspruch 7 oder 8,
**dadurch gekennzeichnet, dass**
die Abstützplatte der Schließeinheit zweiter Art und die Abstützplatte der Schließeinheit dritter Art die gleiche Höhe und/oder die gleiche Breite und/oder die gleiche Dicke aufweisen.

10. System nach einem der Ansprüche 7 bis 9,
**dadurch gekennzeichnet, dass**
die Formaufspannplatten der Schließeinheit zweiter Art eine Werkzeugaufspannfläche aufweisen, die der Werkzeugaufspannfläche der Formaufspannplatten der Schließeinheit dritter Art entsprechen zuzüglich eines Flächenanteils an Werkzeugaufspannfläche, die sich aus der Differenz zwischen dem Durchmesser der Säulen der Schließeinheit dritter Art und dem Durchmesser der Säulen der Schließeinheit zweiter Art errechnet.

11. System nach einem der Ansprüche 7 bis 10,
**dadurch gekennzeichnet, dass**
der Achsabstand der Säulen bei der Schließeinheit zweiter Art gleich groß ist wie der Achsabstand der Säulen bei der Schließeinheit dritter Art.

12. System nach einem der vorstehenden Ansprüche,
**dadurch gekennzeichnet, dass**
die Formaufspannplatten der Schließeinheit zweiter Art für das gleiche maximale Werkzeuggewicht ausgelegt sind wie die Formaufspannplatten der Schließeinheit dritter Art.

13. System nach einem der vorstehenden Ansprüche,
**dadurch gekennzeichnet, dass**
an jeder Schließeinheit zwei Paare an Gelenkhebeln (6a, 7a, 6b, 7b) vorgesehen sind, wobei die beiden Paare symmetrisch zur Symmetrieachse (M) angeordnet sind, und wobei das eine Paar oberhalb der Symmetrieachse (M) und das andere Paar unterhalb der Symmetrieachse angeordnet ist.

14. System nach einem der vorstehenden Ansprüche,
**dadurch gekennzeichnet, dass**
auf dem Maschinenbett (1a, 1b) der jeweiligen Schließeinheit Führungsschienen (12a, 12b) für die bewegliche Formaufspannplatte (2a, 2b) vorgesehen sind, wobei der Achsabstand der Führungsschienen (12a) bei der Schließeinheit erster Art geringer ist als der Achsabstand der Führungsschienen (12b) bei der Schließeinheit zweiter Art, wobei vorzugsweise der Achsabstand der Führungsschienen (12b) bei der Schließeinheit zweiter Art genau so groß ist wie der Achsabstand der Führungsschienen bei der Schließeinheit dritter Art und wobei vorzugsweise die Grundfläche des Maschinenbetts bei der Schließeinheit zweiter Art genau so groß ist wie die Grundfläche des Maschinenbetts bei der Schließeinheit dritter Art.

15. System nach einem der vorstehenden Ansprüche,
**dadurch gekennzeichnet, dass**
der Kniehebelmechanismus als 4-Punkt-Kniehebel oder als 5-Punkt-Kniehebel ausgebildet ist.

## Claims

1. A system of injection-moulding machine closing units comprising two closing units, wherein each of the two closing units is constructed as a toggle lever closing unit, wherein each of the two closing units has a fixed platen, a movable platen (2a, 2b), a support plate (3a, 3b), a crosshead (5a, 5b) movable by means of a drive along the axis of symmetry (M) of the closing unit, and at least one toggle lever mechanism (6a, 6b, 7a, 7b) able to be actuated by means of the crosshead (5a, 5b), arranged between support plate (3a, 3b) and movable platen (2a, 2b) and articulatedly connected with these plates, wherein each of the two closing units is constructed according to a first closing force F1, wherein one of the two closing units is equipped with platens (2a) of a first size and constitutes a closing unit of the first kind, wherein the other of the two closing units is equipped with platens (2b) of a second size and constitutes a closing unit of the second kind, wherein the platens (2b) of the closing unit of the second kind are larger than the platens (2a) of the closing unit of the first kind, in particular with respect to the tool clamping area, wherein the articulated levers (8a, 9a, 10a) of the toggle lever mechanism (6a, 7a) of the closing unit of the first kind and the articulated levers (8b, 9b, 10b) of the toggle lever mechanism (6b, 7b) of the closing unit of the second kind are constructed identically at least with respect to the length between the respective articulation points (P1, P2, P3, P4, P5) with articulated levers corresponding to one another with respect to their spatial arrangement in the respective closing unit, wherein the articulated levers (8b, 9b, 10b) of the toggle lever mechanism (6b, 7b) of the closing unit of the second kind are articulated at a greater distance to the axis of symmetry (M) at support plate (3b) and movable platen (2b) than the articulated levers (8a, 9a, 10a) of the toggle lever mechanism (6a, 7a) of the closing unit of the first kind, and wherein the crosshead (5b) of the closing unit of the second kind is constructed larger in the direction of the articulated levers (8b, 9b, 10b) of the toggle lever mechanism (6b, 7b) than the crosshead (5a) of the closing unit of the first kind, such that the toggle lever mechanisms of the two closing units have the same kinematics.

2. The system according to Claim 1,
**characterized in that**
the articulated levers (8a, 9a, 10a) of the toggle lever mechanism (6a, 7a) of the closing unit of the first kind are articulated in a first distance to the axis of symmetry (M) at support plate (3a) and at movable platen (2a), that the articulated levers (8b, 9b, 10b) of the toggle lever mechanism (6b, 7b) of the closing unit of the second kind are articulated in a second distance to the axis of symmetry (M) at support plate (3b) and at movable platen (2b), wherein a distance difference (A, C, E) results between the second and the first distance, and wherein the crosshead (5b) of the closing unit of the second kind is constructed larger in the direction of the articulated levers (8b, 9b, 10b) of the toggle lever mechanism (6b, 7b) as a function of the distance difference (A, C, E) than the crosshead (5a) of the closing unit of the first kind, preferably precisely by the amount of the distance difference (A, C, E).

3. The system according to Claim 1 or 2,
**characterized in that**
the crosshead (5a) of the first closing unit and the crosshead (5b) of the second closing unit respectively have two fastening arrangements (joint pins and/or joint plates), which are constructed for the articulated fastening of an articulated lever, wherein the fastening arrangements lie symmetrically to the axis of symmetry (M), and wherein the distance between the articulation points of the fastening arrangements at the crosshead of the second closing unit is greater by a length L than the distance between the articulation points of the fastening arrangements at the crosshead (5b) of the first closing unit.

4. The system according to Claim 3,
**characterized in that**
an upper and a lower fastening arrangement are provided respectively at the crosshead (5a) of the closing unit of the first kind and at the crosshead (5b) of the closing unit of the second kind.

5. The system according to one of the preceding claims,
**characterized in that**
the columns (11a) of the closing unit of the first kind and the columns (11b) of the closing unit of the second kind have the same diameter (D1=D2).

6. The system according to one of the preceding claims,
**characterized in that**
the drive for moving the crosshead (5a) of the first closing unit is identical with regard to its construction and its drive power to the drive for moving the crosshead (5b) of the second closing unit, wherein in particular identical motors are provided, e.g. electric or hydraulic motors.

7. The system according to one of the preceding claims and with a further closing unit,
**characterized in that**
the further closing unit is constructed according to a second closing force F2 and constitutes a closing unit of the third kind, wherein the second closing force F2 is greater than the first closing force F1 of the closing units of the first and second kind.

8. The system according to Claim 7,
**characterized in that**
the platens of the closing unit of the second kind and the platens of the closing unit of the third kind have the same height and/or the same width and/or the same thickness.

9. The system according to Claim 7 or 8,
**characterized in that**
the support plate of the closing unit of the second kind and the support plate of the closing unit of the third kind have the same height and/or the same width and/or the same thickness.

10. The system according to one of Claims 7 to 9,
**characterized in that**
the platens of the closing unit of the second kind have a tool clamping area which correspond to the tool clamping area of the platens of the closing unit of the third kind plus an area portion of tool clamping area which is calculated from the difference between the diameter of the columns of the closing unit of the third kind and the diameter of the columns of the closing unit of the second kind.

11. The system according to one of Claims 7 to 10,
**characterized in that**
the axis distance of the columns in the closing unit of the second kind is of equal size to the axis distance of the columns in the closing unit of the third kind.

12. The system according to one of the preceding claims,
**characterized in that**
the platens of the closing unit of the second kind are designed for the same maximum tool weight as the platens of the closing unit of the third kind.

13. The system according to one of the preceding claims,
**characterized in that**
at each closing unit, two pairs of articulated levers (6a, 7a, 6b, 7b) are provided, wherein the two pairs are arranged symmetrically to the axis of symmetry (M), and wherein the one pair is arranged above the axis of symmetry (M) and the other pair is arranged below the axis of symmetry.

14. The system according to one of the preceding claims,
**characterized in that**
on the machine bed (1a, 1b) of the respective closing unit, guide rails (12a, 12b) are provided for the movable platen (2a, 2b), wherein the axis distance of the guide rails (12a) in the closing unit of the first kind is smaller than the axis distance of the guide rails (12b) in the closing unit of the second kind, wherein the axis distance of the guide rails (12b) in the closing unit of the second kind is preferably precisely as great as the axis distance of the guide rails in the closing unit of the third kind and wherein preferably the base area of the machine bed in the closing unit of the second kind is precisely as great as the base area of the machine bed in the closing unit of the third kind.

15. The system according to one of the preceding claims,
**characterized in that**
the toggle lever mechanism is constructed as a 4-point toggle lever or as a 5-point toggle lever.

## Revendications

1. Système d'unités de fermeture de machines de moulage par injection comprenant deux unités de fermeture, dans lequel chacune des deux unités de fermeture est conçue en tant qu'unité de fermeture à levier à genouillère, dans lequel chacune des deux unités de fermeture présente une plaque de serrage de moule fixe, une plaque de serrage de moule mobile (2a, 2b), une plaque d'appui (3a, 3b), une traverse (5a, 5b) mobile le long d'un axe de symétrie (M) de l'unité de fermeture au moyen d'un entraînement, et au moins un mécanisme de levier à genouillère (6a, 6b, 7a, 7b) actionnable au moyen de la traverse (5a, 5b), disposé entre la plaque d'appui (3a, 3b) et la plaque de serrage de moule mobile (2a, 2b) et relié en articulation avec ces plaques, dans lequel chacune des deux unités de fermeture est conçue selon une première force de fermeture F1, dans lequel une des deux unités de fermeture est dotée de plaques de serrage de moule (2a) d'une première grandeur et représente une unité de fermeture de premier type, dans lequel l'autre des deux unités de fermeture est dotée de plaques de serrage de moule (2b) d'une deuxième grandeur et représente une unité de fermeture d'un deuxième type, dans lequel les plaques de serrage de moule (2b) de l'unité de fermeture de deuxième type sont plus grandes que les plaques de serrage de moule (2a) de l'unité de fermeture de premier type, en particulier en ce qui concerne la surface de serrage d'outil, dans lequel les leviers d'articulation (8a, 9a, 10a) du mécanisme de levier à genouillère (6a, 7a) de l'unité de fermeture de premier type et les leviers d'articulation (8b, 9b, 10ab) du mécanisme de levier à genouillère (6b, 7b) de l'unité de fermeture de deuxième type sont conçus identiques du moins en ce qui concerne la longueur entre les points d'articulation (P1, P2, P3, P4, P5) respectifs pour des leviers d'articulation correspondant entre eux dans l'unité de fermeture respective par rapport à leur agencement spatial, dans lequel les leviers d'articulation (8a, 9a, 10b) du mécanisme de levier à genouillère (6b, 7b) de l'unité de fermeture de deuxième type sont articulés sur la plaque d'appui (3b) et la plaque de serrage de moule mobile (2b) à une plus grande distance par rapport à l'axe de symétrie (M) que les leviers d'articulation (8a, 9a, 10a) du mécanisme de levier à genouillère (6a, 7a) de l'unité de fermeture de premier type, et dans lequel la traverse (5b) de l'unité de fermeture de deuxième type en direction des leviers d'articulation (8b, 9b, 10b) du mécanisme de levier à genouillère (6b, 7b) est conçue plus grande que la traverse (5a) de l'unité de fermeture de premier type, de sorte que les mécanismes de levier à genouillère des deux unités de fermeture présentent la même cinématique.

2. Système selon la revendication 1,
**caractérisé en ce que**
les leviers d'articulation (8a, 9a, 10a) du mécanisme de levier à genouillère (6a, 7a) de l'unité de fermeture de premier type sont articulés sur la plaque d'appui (3a) et la plaque de serrage de moule mobile (2a) à une première distance par rapport à l'axe de symétrie (M), que les leviers d'articulation (8b, 9b, 10b) du mécanisme de levier à genouillère (6b, 7b) de l'unité de fermeture de deuxième type sont articulés sur la plaque d'appui (3b) et la plaque de serrage de moule mobile (2b) à une deuxième distance par rapport à l'axe de symétrie (M), dans lequel il y a une différence de distance (A, C, E) entre la deuxième et la première distance, et dans lequel la traverse (5b) de l'unité de fermeture de deuxième type est conçue plus grande en direction des leviers d'articulation (8b, 9b, 10b) du mécanisme de levier à genouillère (6b, 7b) en fonction de la différence de distance (A, C, E) que la traverse (5a) de l'unité de fermeture de premier type, de préférence précisément du montant de la différence de distance (A, C, E).

3. Système selon la revendication 1 ou 2,
**caractérisé en ce que**
la traverse (5a) de la première unité de fermeture et la traverse (5b) de la deuxième tête de fermeture présentent respectivement deux dispositifs de fixation (boulons d'articulation et/ou éclisses d'articulation), lesquels sont conçus pour la fixation en articulation d'un levier d'articulation, dans lequel les dispositifs de fixation sont symétriques à l'axe de symétrie (M), et dans lequel la distance entre les points d'articulation des dispositifs de fixation sur la traverse de la deuxième unité de fermeture est plus grande d'une longueur L que la distance entre les points d'articulation des dispositifs de fixation sur la traverse (5b) de la première unité de fermeture.

4. Système selon la revendication 3,
**caractérisé en ce que**
respectivement des dispositifs de fixation supérieur et inférieur sont prévus sur la traverse (5a) de l'unité de fermeture de premier type et sur la traverse (5b) de l'unité de fermeture de deuxième type.

5. Système selon l'une des revendications précédentes,
**caractérisé en ce que**
les colonnes (11a) de l'unité de fermeture de premier type et les colonnes (11b) de l'unité de fermeture de deuxième type présentent le même diamètre (D1=D2).

6. Système selon l'une des revendications précédentes,
**caractérisé en ce que**
l'entraînement pour déplacer la traverse (5a) de la première unité de fermeture est identique à l'entraînement pour déplacer la traverse (5b) de la deuxième unité de fermeture en regard de sa construction et de sa puissance d'entraînement, dans lequel en particulier des moteurs identiques sont prévus, par ex. des moteurs électriques ou hydrauliques.

7. Système selon l'une des revendications précédentes et comprenant une unité de fermeture supplémentaire,
**caractérisé en ce que**
l'unité de fermeture supplémentaire est conçue selon une deuxième force de fermeture F2 et représente une unité de fermeture de troisième type, dans lequel la deuxième force de fermeture F2 est plus grande que la première force de fermeture F1 des unités de fermeture de premier et deuxième type.

8. Système selon la revendication 7,
**caractérisé en ce que**
les plaques de serrage de moule de l'unité de fermeture de deuxième type et les plaques de serrage de moule de l'unité de fermeture de troisième type présentent la même hauteur et/ou la même largeur et/ou la même épaisseur.

9. Système selon la revendication 7 ou 8,
**caractérisé en ce que**
la plaque d'appui de l'unité de fermeture de deuxième type et la plaque d'appui de l'unité de fermeture de troisième type présentent la même hauteur et/ou la même largeur et/ou la même épaisseur.

10. Système selon l'une des revendications 7 à 9,
**caractérisé en ce que**
les plaques de serrage de moule de l'unité de fermeture de deuxième type présentent une surface de serrage d'outil qui correspond à la surface de serrage d'outil des plaques de serrage de moule de l'unité de fermeture de troisième type plus une part surfacique de la surface de serrage de moule qui est calculée à partir de la différence entre le diamètre des colonnes de l'unité de fermeture de troisième type et le diamètre des colonnes de l'unité de fermeture de deuxième type.

11. Système selon l'une des revendications 7 à 10,
**caractérisé en ce que**
l'entraxe des colonnes sur l'unité de fermeture de deuxième type est de la même taille que l'entraxe des colonnes de l'unité de fermeture de troisième type.

12. Système selon l'une des revendications précédentes,
**caractérisé en ce que**
les plaques de serrage de moule de l'unité de fermeture de deuxième type sont conçues pour le même poids d'outil maximal que les plaques de serrage de moule de l'unité de fermeture de troisième type.

13. Système selon l'une des revendications précédentes,
**caractérisé en ce que**
deux paires de leviers d'articulation (6a, 7a, 6b, 7b) sont prévues sur chaque unité de fermeture, dans lequel les deux paires sont disposées symétriques à l'axe de symétrie (M) et dans lequel l'une paire est située au-dessus de l'axe de symétrie (M) et l'autre paire est située en-dessous de l'axe de symétrie.

14. Système selon l'une des revendications précédentes,
**caractérisé en ce que**
des rails de guidage (12a, 12b) pour la plaque de serrage de moule mobile (2a, 2b) sont prévus sur le socle de machine (1a, 1b) de l'unité de fermeture respective, dans lequel l'entraxe des rails de guidage (12a) sur l'unité de fermeture de premier type est plus faible que l'entraxe des rails de guidage (12b) sur l'unité de fermeture de deuxième type, dans lequel de préférence l'entraxe des rails de guidage (12b) sur l'unité de fermeture de deuxième type est précisément aussi grand que l'entraxe des rails de guidage sur l'unité de fermeture de troisième type, et dans lequel de préférence l'aire du socle de machine sur l'unité de fermeture de deuxième type est précisément aussi grand que l'aire du socle de machine sur l'unité de fermeture de troisième type.

15. Système selon l'une des revendications précédentes,
**caractérisé en ce que**
le mécanisme de levier à genouillère est conçu en tant que levier à genouillère 4 points ou levier à genouillère 5 points.
